Europäisches Patentamt

European Patent Office

Office européen des brevets

(19)

(11) Veröffentlichungsnummer : **0 340 502 B1**

(12)

# EUROPÄISCHE PATENTSCHRIFT

(45) Veröffentlichungstag der Patentschrift :
**26.08.92 Patentblatt 92/35**

(51) Int. Cl.$^5$ : **B65B 25/14,** B65B 35/58, B65G 47/24

(21) Anmeldenummer : **89106609.4**

(22) Anmeldetag : **13.04.89**

(54) Vorrichtung zum Wenden von Faltschachteln.

(30) Priorität : **03.05.88 US 189629**

(43) Veröffentlichungstag der Anmeldung :
**08.11.89 Patentblatt 89/45**

(45) Bekanntmachung des Hinweises auf die Patenterteilung :
**26.08.92 Patentblatt 92/35**

(84) Benannte Vertragsstaaten :
**DE ES FR GB IT SE**

(56) Entgegenhaltungen :
**DE-U- 8 632 668
FR-A- 2 578 522
GB-A- 2 099 345
"Landmaschinen und Geräte", IV. Auflage, H. Steinmetz, Seiten 134 u. 135**

(73) Patentinhaber : **WINKLER & DÜNNEBIER MASCHINENFABRIK UND EISENGIESSEREI KG
Sohler Weg 65
W-5450 Neuwied 1 (DE)**

(72) Erfinder : **Blümle, Martin, Dipl.-Ing.
Am Tempelsberg 2
W 5451 Horhausen (DE)**

(74) Vertreter : **Schieferdecker, Lutz, Dipl.-Ing.
Herrnstrasse 37
W-6050 Offenbach am Main (DE)**

EP 0 340 502 B1

## Beschreibung

Die Erfindung betrifft eine Vorrichtung zum Wenden von Faltschachteln in einer zum Verpacken von Umschlägen dienenden Maschine.

Vorrichtungen zum Verpacken von Umschlägen sind bekannt. So beschreibt z.B. die US-PS 3 562 775 eine derartige Vorrichtung, in welcher auf stehend gestapelte Umschläge von oben Faltschachteln aufgesetzt werden, die sodann zusammen mit ihrem Inhalt über eine Schrägfläche abwärts gleiten und an einem Anschlag derart abgebremst werden, daß sie weiterkippen und schließlich auf einem Förderband mit dem Boden nach unten und der Öffnung den Faltschachtel nach oben zu liegen kommen. Bei dieser Vorrichtung werden die Faltschachteln quer zur Transportrichtung der in Stapeln stehenden Umschläge zugeführt und auch quer zu deren Transportrichtung mit den in ihnen befindlichen Umschlägen über die Schrägfläche zu dem Transportband bewegt. Eine solche Anordnung setzt voraus, daß genügend Platz für den quer gerichteten Transport der leeren und der vollen Faltschachteln vorhanden ist. Häufig steht dieser Platz jedoch nicht zur Verfügung, so daß der Erfindung die Aufgabe zugrunde liegt, für eine Vorrichtung zum Verpacken von Umschlägen Maßnahmen vorzusehen, die es erlauben, die auf die zu einem Stapel zusammengefaßten Umschläge von oben her aufgesetzte Faltschachtel zusammen mit ihren Inhalt in Transportrichtung der Umschläge bzw. der Umschlagstapel weiterzutransportieren und hierbei derart zu wenden, daß sich wiederum der Boden den Faltschachtel unten und ihre Öffnung bzw. ihre Verschlußklappen oben befinden.

Es ist ferner eine Vorrichtung zum Wenden von Steinplatten und Fliesen aus der FR-A-2 578 522 bekannt. Sie weist als wesentliche Teile jeweils gesondert bodenseitig gelagerte Träger in Form von Platten auf, die über Kragarme von einem gemeinsamen Antrieb verschwenkt werden. Die Träger sind aus einer horizontalen Position bis in eine vertikale Position verschwenkbar, in der sie den zu wendenden Körper jeweils übergeben.

Die der Erfindung zugrundeliegende Aufgabe wird mit Hilfe der Merkmale des Patentanspruches 1 gelöst. Dabei sind beide Träger der aus zwei Trägern bestehenden Vorrichtung zum Wenden gemeinsam um eine Achse verschwenkbar und ferner ist der zweite Träger zusätzlich um eine Achse relativ zum ersten Träger verschwenkbar. Auch dient der eine Träger zugleich als Träger für den anderen Träger.

Bei der Handhabung stützt der eine Träger die Faltschachtel von unten, während der andere Träger auf die Faltschachtel von oben aufgelegt wird. Gemeinsam werden die beiden Träger sodann verschwenkt, wobei der zuerst oben befindliche Träger nach unten zu liegen kommt. Verbunden sind die beiden Träger durch mindestens ein Zwischenstück, das ferner Relativbewegungen der beiden Träger zueinander erlaubt, damit die beiden Träger auch aufgeklappt werden können. Die Anordnung der beiden Träger bzw. ihrer Schwenkachsen kann schließlich derart gewählt werden, daß der Wendevorgang in Transportrichtung der gestapelten Umschläge und nicht quer dazu erfolgt. Beide Richtungen sind grundsätzlich möglich.

Weitere Merkmale der Erfindung gehen aus der Beschreibung und den Ansprüchen im Zusammenhang mit der Zeichnung hervor.

Die Erfindung wird nachstehend anhand eines Ausführungsbeispieles, das in der Zeichnung dargestellt ist, näher beschrieben. Dabei zeigen:

Fig. 1: eine schematische Ansicht einer Vorrichtung zum Verpacken von Umschlägen in Faltschachteln mit einer Wendevorrichtung für die Faltschachteln;

Fig. 2: Einzelheiten der Wendevorrichtung während des Wendevorganges;

Fig. 3: Einzelheiten der Wendevorrichtung in verschiedenen Arbeitsstadien;

Fig. 4: eine Prinzipskizze mit schematischen Darstellungen unterschiedlicher Stadien beim Wendevorgang;

Fig. 5: eine Ansicht wie in Figur 2 von einer abgewandelten Wendevorrichtung und

Fig. 6: eine Einzelheit der Wendevorrichtung gemäß Figur 5 in größerem Maßstab.

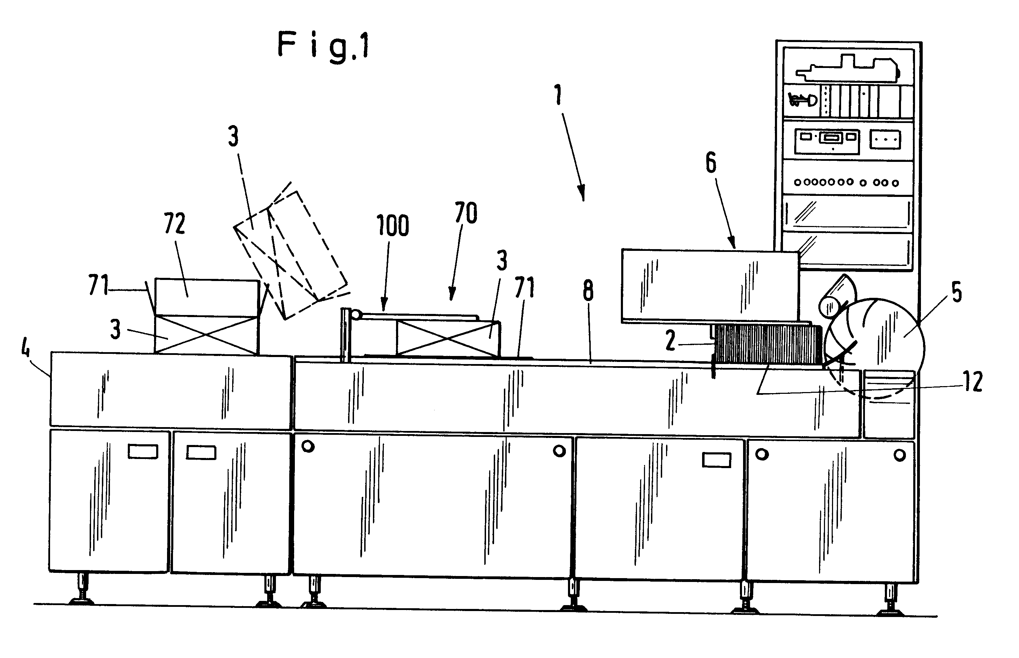

Gemäß der Darstellung in Figur 1 umfaßt eine Vorrichtung 1 zum Verpacken von Umschlägen 2 in Faltschachteln 3 ein Maschinengestell 4 und eine Ablegevorrichtung 5 für die zunächst einzeln ankommenden Umschläge 2. Die von der Ablegevorrichtung 5 abgestellten Umschläge 2 werden in einer Stapelstrecke 6 horizontal gestapelt und von dort zu einer Einschachtel- bzw. Wendestation 70 in hier nicht näher interessierender Weise geschoben, in der sie in Faltschachteln 3 verpackt werden. Die geschieht dadurch, daß die Faltschachteln 3 entweder von Hand oder mit Hilfe eines in Figur 1 ebenfalls nicht dargestellten Roboters auf die dorthin verschobenen, aus Umschlägen 2 bestehenden Stapel 12 gesetzt werden. Daraufhin werden die gefüllten Faltschachteln mit Hilfe einer Wendevorrichtung 100 derart in Verlängerung der Bewegungsrichtung der Stapel 12 umgesetzt, daß die zunächst mit ihrer Öffnung nach unten gerichteten Faltschachteln 3 um 180° gewendet werden, so daß ihre Öffnungen und ihre Verschlußklappen 71, 72 gemäß der Darstellung links in Figur 1 nach oben gerichtet sind.

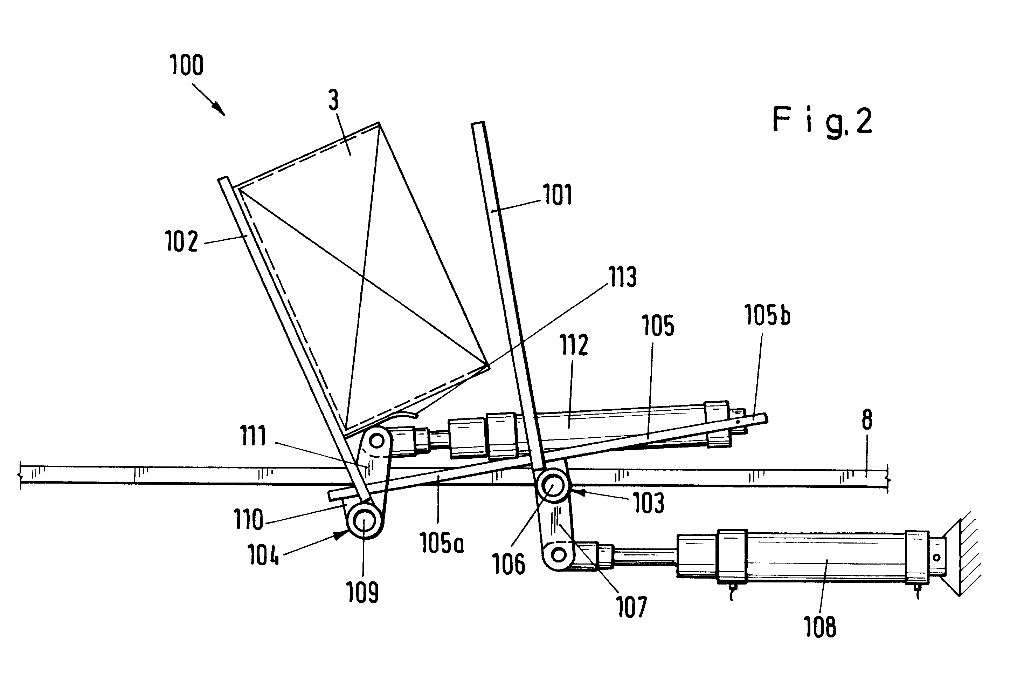

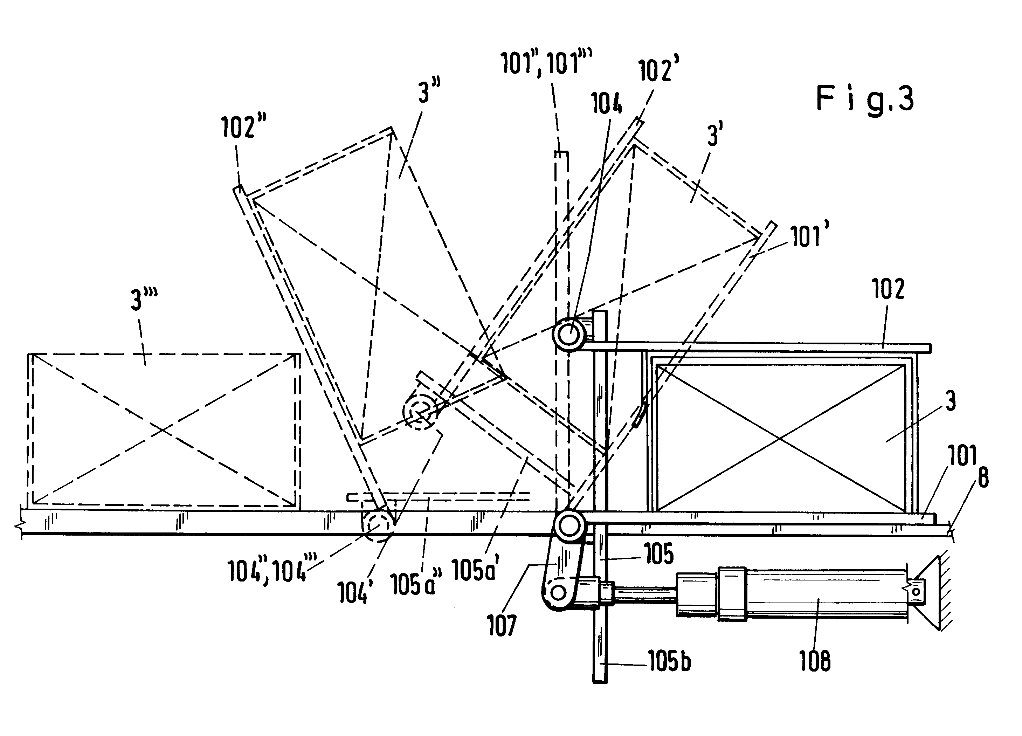

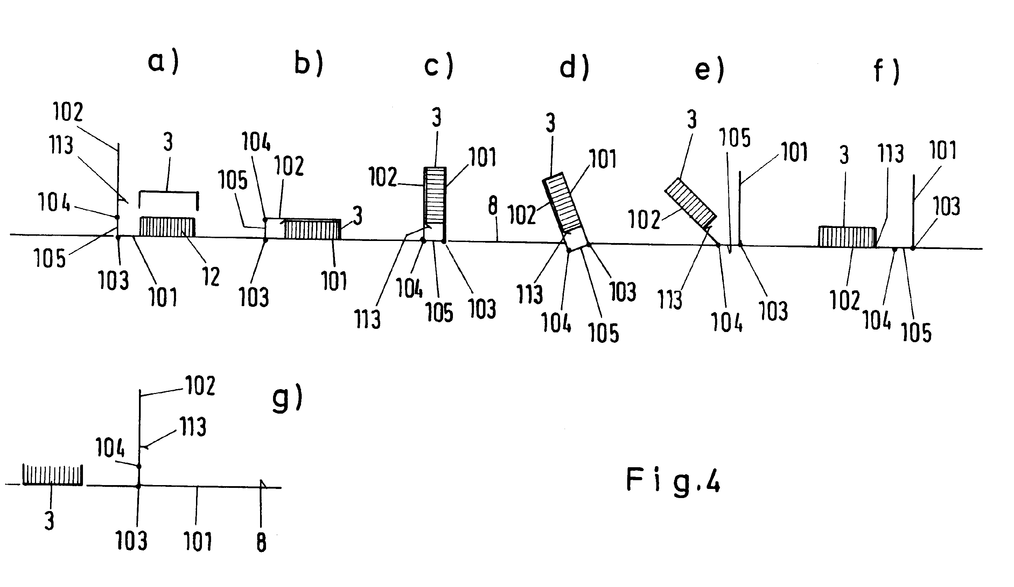

Einzelheiten der Wendevorrichtung 100, die vorzugsweise in Bewegungsrichtung des von der Stapelstrecke 6 kommenden Stapels 12 arbeitet, sind in den Figuren 2 und 3 und bezüglich der einzelnen Stadien des Bewegungsablaufes in Figur 4 dargestellt.

Gemäß Figur 2 weist die Wendevorrichtung 100 zwei, im Abstand voneinander angeordnete und zueinander verstellbare, z.B. gabelförmige Träger 101 and 102 auf, die gemeinsam um eine horizontal liegende Achse 103 relativ zu einer Tischplatte 8 der Vorrichtung 1 verschwenkbar gelagert sind.

Der gabelförmige Träger 102 ist ferner für sich um eine Achse 104 relativ zu dem gabelförmigen Träger 101 schwenkbar an einem Zwischenstück 105 gelagert. Dieses Zwischenstück 105 besteht aus zwei Armen 105a und 105b und ist starr mit dem gabelförmigen Träger 101 unter einem rechten Winkel verbunden. Als Achse 103 ist gemäß Ausführungsbeispiel eine Welle 106 vorgesehen, die drehbar bzw. schwenkbar im Maschinengestell gelagert ist. Das Zwischenstück 105 ist drehfest auf der Welle 106 angeordnet. Auf die Welle 106 wirkt über einen Hebel 107 eine an diesem angelenkte Kolben-Zylindereinrichtung 108 z.B. in Gestalt eines Pneumatikzylinders 108. Dieser dient zum gemeinsamen Verschwenken der gabelförmigen Träger 101 and 102 und ist selbst schwenkbar gelagert.

Der gabelförmige Träger 102 ist drehfest auf einer die Achse 104 bildenden Welle 109 befestigt. Diese Welle 109 ist drehbar in einem Lager 110 angeordnet bzw. gesichert. Das Lager 110 befindet sich am freien Ende des einen Armes 105a des Zwischenstückes 105. Ein Hebel 111 sitzt drehfest auf der Welle 109 und ist an eine weitere Kolben-Zylindereinrichtung 112 in Gestalt eines Pneumatikzylinders 112 angelenkt, der am freien Ende des Armes 105b des Zwischenstückes 105 ebenfalls verschwenkbar gelagert ist. Mit Hilfe der KolbenZylindereinrichtung 112 läßt sich der gabelförmige Träger 102 um die Achse 104 relativ zu dem gabelförmigen Träger 101 bzw. dem senkrecht zu ihm stehenden Arm 105a verschwenken. Der gabelförmige Träger 102 ist schließlich noch mit einem am freien Ende abgebogenen Stützteil 113 bzw. Halteblech 113 versehen, welches während der Drehphase der vollen Faltschachtel 3 abstützt.

Die beiden Arme 105a und 105b des Zwischenstückes 105 sind etwa gleich lang und im Querschnitt gemäß Fig. 2 zusammen mit dem gabelförmigen Träger 101 etwa T-förmig. Der Hebel 107 liegt weitgehend in Verlängerung des gabelförmigen Trägers 101, wobei die Achse 103 derart in bzw. unter der Tischplatte 8 angeordnet ist, daß gemäß einer bevorzugten Ausführungsform der gabelförmige Träger 101 in der Ebene der Tischplatte 8 gemäß Figur 4 liegen kann.

Verschiedene Stadien des Schwenk- bzw. Wendevorganges sind in Figur 3 dargestellt, wobei jeweils gleiche Teile dieselben Bezugszahlen und entsprechend den verschiedenen Lagen unterschiedliche Indizes besitzen.

Die verschiedenen Darstellungen a - g in Figur 4 zeigen schließlich noch stark abstrahiert den Bewegungsablauf der Wendevorrichtung 100.

Gemäß Figur 4a steht ein Stapel 12 in der Einschachtelposition. Der gabelförmige Träger 101 befindet sich in der Ebene der Tischplatte 8 unter dem Stapel 12. Der Träger 102 ist um 90° nach oben in eine vertikale Stellung geklappt. Die Achse 104 befindet sich senkrecht über der Achse 103.

Gemäß Figur 4b ist eine Faltschachtel 3 über den Stapel 12 gestülpt. Der Träger 101 liegt noch immer in der Ebene der Tischplatte 8. Der Träger 102 ist auf die Faltschachtel 3 geklappt und liegt parallel zu dem Träger 101. Die Achse 104 steht weiterhin senkrecht über der Achse 103. Die Faltschachtel 3 mit dem Stapel 12 befindet sich zwischen den beiden Trägern 101 und 102, wobei ferner das Stützteil 113 bzw. Halteblech 113 seitlich (links in Fig. 4b) an der Faltschachtel 3 anliegt. Das Zwischenstück 105 bzw. sein einer Arm 105a definiert den Abstand der beiden parallel zueinander liegenden Träger 101 und 102.

Gemäß der Darstellung in Figur 4c ist die gefüllte Faltschachtel 3 um 90° nach oben geschwenkt und wird unten von dem Stützteil 113 bzw. Halteblech 113 abgestützt. Die beiden 9 abelförmigen Träger 101 und 102 stehen parallel nach oben und um 90° zur Ebene der Tischplatte 8. Die Achse 104 ist in die Ebene der Tischplatte 8 verschwenkt.

Gemäß Figur 4d befindet sich die Faltschachtel 3 mit ihrem Inhalt in einer Stellung von etwa 120° bezogen auf die Darstellung in Figur 4a. Die beiden gabelförmigen Träger 101 und 102 stehen noch immer parallel zueinander. Die Achse 104 befindet sich jetzt unterhalb der Ebene der Tischplatte 8.

Gemäß Figur 4e ist der gabelförmige Träger 101 in eine Lage senkrecht zur Ebene der Tischplatte 8 zurückgeschwenkt, wodurch sich auch das mit ihm starr verbundene Zwischenstück 105 wieder im Uhrzeigersinn gehoben hat und die Achse 104 jetzt in der Ebene der Tischplatte 8 liegt. Die Faltschachtel 3 wird mit ihrem Inhalt von dem gabelförmigen Träger 102 und dem Stützteil 113 getragen.

Nach Figur 4f steht der gabelförmige Träger 101 noch immer senkrecht zur Ebene der Tischplatte 8. Der gabelförmige Träger 102 hat die Faltschachtel 3 mit ihrem Inhalt, und zwar mit der Öffnung nach oben, in eine horizontale Ebene bewegt und kann sie dort z.B. auf ein weiterführendes, nicht dargestelltes Transportband oder dgl. absetzen. Die Achse 104 liegt noch immer in der Ebene der Tischplatte 8.

Gemäß Figur 4g sind die Träger 101 und 102 in ihrer Ausgangsposition wie in Figur 4a zurückgeschwenkt, wobei der Träger 101 in der Ebene der Tischplatte 8 liegt und der Träger 102 senkrecht zur Ebene der Tischplatte 8 steht. Die Achse 104 befindet sich wiederum senkrecht über der Achse 103.

Der gesamte Bewegungsablauf erfolgt durch eine jeweils zeitgemäße Ansteuerung der beiden Kolben-Zylindereinrichtungen 108 und 112 und gestattet somit das Wenden einen mit ihrer Öffnung nach unten auf einem Stapel liegenden Faltschachel, wobei der Wendevorgang auch mehr oder weniger als 180° betragen kann. Zum Wenden von Stapeln 12 bzw. von Faltschacheln 3 mit Inhalt oder von beliebigen Körpern weist die Wendevorrichtung 100 somit einen in der Ausgangsposition bodenseitig angeordneten Träger 101 und einen schwenkbaren, auf die Faltschachel 3 auflegbaren Träger 102 auf, die über ein Zwischenstück 105 bzw. 105a miteinander verbunden sind, ferner gemeinsam verschwenkbar sind und schließlich auch relativ zueinander verschwenkbar sind, so daß die beiden Träger 101 und 102 aus einer parallelen Lage zueinander gemäß Figur 4b und aus gemeinsam verschwenkten, parallelen Lagen zueinander gemäß den Figuren 4c und 4d auch in geöffnete Positionen gemäß den Figuren 4a, 4e, 4f und 4g verschwenkbar sind.

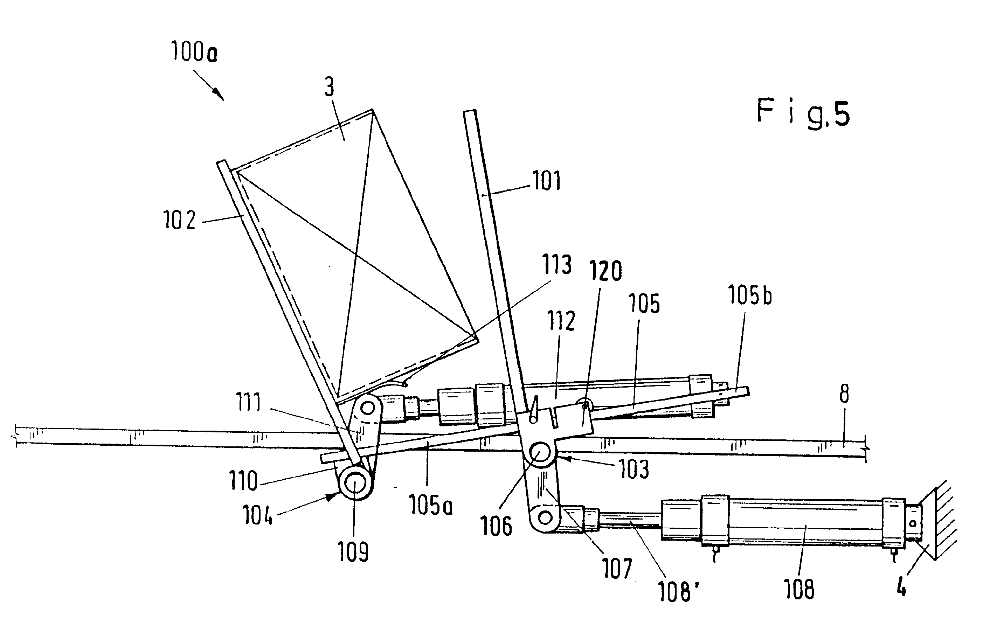

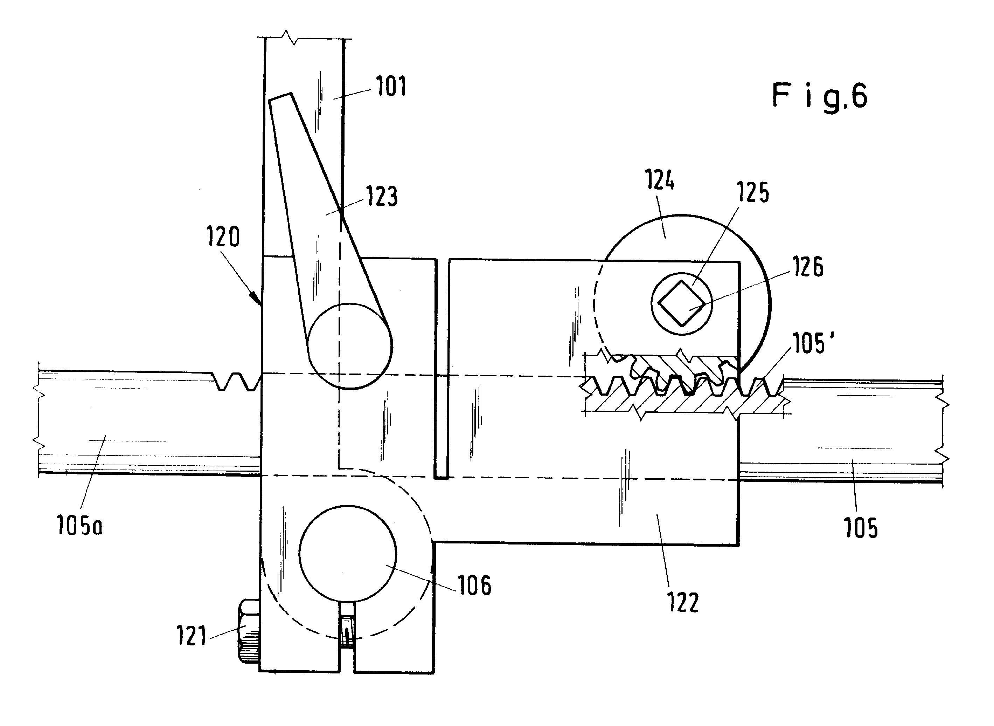

Die beiden Figuren 5 und 6 betreffen eine abgewandelte Ausführungsform bzw. eine Wendevorrichtung 100a, deren gabelförmige Träger 101 und 102 nicht nur relativ zueinander verschwenkbar sind, sondern deren Abstand voneinander zusätzlich verändert werden kann. Hierdurch ist es möglich, mit der Wendevorrichtung 100a auch Faltschacheln 3 unterschiedlicher Größe zu wenden.

Soweit die Wendevorrichtung 100 gemäß Figur 2 und die Wendevorrichtung 100a gemäß Figur 5 übereinstimmende Teile aufweisen, werden hierfür dieselben Bezugszahlen benutzt.

Bei der Wendevorrichtung 100a ist übereinstimmend wie bei der Wendevorrichtung 100 die Welle 106 drehbar im Maschinengestell 4 gelagert und drehfest mit dem Hebel 107 verbunden. Auf der Welle 106 ist in Abänderung zur Wendevorrichtung 100 jedoch mindestens ein Klemmlager 120 mittels einer Schraube 121 drehfest aufgeklemmt und dient als Träger für das Zwischenstück 105. Vorzugsweise sind zwei Klemmlager 120 seitlich nebeneinander bzw. in Figur 5 hintereinander vorgesehen und dienen als Träger für zwei im Abstand voneinander sowie parallel zueinander angeordnete Zwischenstücke 105. Zwischen den Klemmlagern 120 ist der gabelförmige Träger 101 ebenfalls drehfest auf der Welle 106 befestigt.

Rechtwinklig zur Welle 106 und zum gabelförmigen Träger 101 verläuft eine Längsbohrung 122 in jedem Klemmlager 120. In dieser Längsbohrung 122 ist jeweils das Zwischenstück 105 verschiebbar geführt und mittels eines Klemmhebels 123 fixierbar. Zu diesem Zweck ist das Zwischenstück 105 vorzugsweise im Querschnitt kreisförmig. Ferner weist es im Bereich des Klemmlagers 120 eine Verzahnung 105′ auf, in die ein Zahnrad 124 eingreift. Das Zahnrad 124 ist drehfest auf einem Bolzen 125 angeordnet, der wiederum im Klemmlager 120 drehbar gelagert ist.

Zum Längsverschieben des Zwischenstückes 105, dessen Arm 105a an seinem Ende den gabelförmigen Träger 102 trägt, wird bei gelösten Klemmhebel 123 das Zahnrad 124 mittels eines Schraubenschlüssels gedreht, so daß eine Verschiebung des Zwischenstückes 105 über die Verzahnung 105′ erfolgt. Ein Vierkant 126 befindet sich am Bolzen 125 und dient als Ansatz für den Schraubenschlüssel.

Wenn gemäß einer bevorzugten Ausführungsform zwei Klemmlager 120 und zwei Zwischenstücke 105 vorgesehen sind, so befindet sich jeweils am freien Ende eines jeden Armes 105a der beiden Zwischenstücke 105 ein Lager 110. In diesen Lagern 110 ist die Welle 109 wiederum drehbar gelagert. Der gabelförmige Träger 102 und der Hebel 111 sind an der Welle 109 drehfest befestigt. Am Hebel 111 und am freien Ende des zweiten Armes 105b eines jeden Zwischenstückes 105 ist wie bei dem ersten Ausführungsbeispiel die Kolben-Zylindereinrichtung 112 verschwenkbar angelenkt und wird beim Verstellen des bzw. der Zwischenstücke 105 entsprechend mitverstellt.

**Patentansprüche**

1. Vorrichtung zum Wenden von Faltschachteln (3) oder dergleichen mit mindestens einem angetriebenen, um eine horizontale Achse (103) verschwenkbaren, bodenseitig gelagerten ersten Träger (101) und mit mindestens einem gesondert angetriebenen und relativ zum ersten Träger (101) verschwenkbaren, auf die Faltschachel (3) auflegbaren, zweiten Träger (102), der ferner zugleich mit dem ersten Träger (101) um dessen Achse (103) verschwenkbar ist.

2. Vorrichtung nach Anspruch 1, dadurch gekennzeichnet, daß der erste Träger (101) zugleich als Träger für den zweiten Träger (102) dient.

3. Vorrichtung nach einem oder mehreren der vorhergehenden Ansprüche, dadurch gekennzeichnet, daß der erste Träger (101) einen Arm (105a) aufweist und daß der zweite Träger (102) an dem Arm (105a) des ersten Trägers (101) angelenkt ist.

4. Vorrichtung nach einem oder mehreren der vorhergehenden Ansprüche, dadurch gekennzeichnet, daß der erste Träger (101) einen Arm (105b) aufweist und daß am Arm (105b) ein Antrieb (112) angelenkt ist, mit dessen Hilfe der zweite Träger (102) relativ zum ersten Träger (101) verschwenkbar ist.

5. Vorrichtung nach einem oder mehreren der vorhergehenden Ansprüche, dadurch gekennzeichnet, daß der Träger (102) ein vorstehendes Stützteil (113) aufweist.

6. Vorrichtung nach einem oder mehreren der vorhergehenden Ansprüche, dadurch gekennzeichnet, daß der bzw. die Arme (105a, 105b) zusammen mit dem Träger (101) eine L-Form bzw. eine T-Form ergeben.

7. Vorrichtung nach einem oder mehreren der vorhergehenden Ansprüche, dadurch gekennzeichnet, daß der Antrieb für den zweiten Träger (102) eine Kolben-Zylindereinrichtung (112) ist.

8. Vorrichtung nach einem oder mehreren der vorhergehenden Ansprüche, dadurch gekennzeichnet, daß der Träger (101) um die Achse (103) mit Hilfe eines Hebels (107) und einer an ihm angelenkten Kolben-Zylindereinrichtung (108) verstellbar ist.

9. Vorrichtung nach einem oder mehreren der vorhergehenden Ansprüche, dadurch gekennzeichnet, daß die Träger (101, 102) gemeinsam um die horizontal liegende Achse (103) relativ zu einer Tischplatte (8) der Vorrichtung (1) verschwenkbar sind.

10. Vorrichtung nach einem oder mehreren der vorhergehenden Ansprüche, dadurch gekennzeichnet, daß die Achse (103) in/unter der Tischplatte (8) derart angeordnet ist, daß der Träger (101) in die Ebene der Tischplatte (8) schwenkbar ist.

11. Vorrichtung nach einem oder mehreren der vorhergehenden Ansprüche, dadurch gekennzeichnet, daß die Träger (101, 102) gabelförmig sind.

12. Vorrichtung nach einem oder mehreren der vorhergehenden Ansprüche, dadurch gekennzeichnet, daß die beiden Arme (105a und 105b) zusammen ein Zwischenstück (105) bilden, das am ersten Träger (101) starr angeordnet ist und daß an seinem einen Ende der zweite Träger (102) und daß an seinem anderen Ende dessen Antrieb (112) angelenkt sind.

13. Vorrichtung nach einem oder mehreren der vorhergehenden Ansprüche, dadurch gekennzeichnet, daß der Abstand der beiden Träger (101 und 102) voneinander veränderbar ist.

14. Vorrichtung nach einem oder mehreren der vorhergehenden Ansprüche, dadurch gekennzeichnet, daß zur Veränderung des Abstandes der beiden Träger (101 und 102) voneinander das Zwischenstück (105) relativ zum Träger (101) verstellbar ist.

15. Vorrichtung nach einem oder mehreren der vorhergehenden Ansprüche, dadurch gekennzeichnet, daß zwei Zwischenstücke (105) vorgesehen, parallel zueinander angeordnet und je mittels eines Klemmlagers (120) an einer den Träger (101) bodenseitig lagernden Welle (106) befestigbar sind.

## Claims

1. Apparatus for turning folding boxes (3) or the like comprising at least one first driven carrier (101) which is mounted at the bottom end and which is pivotable about a horizontal axis (103), and at least one second separately driven carrier (102) which is pivotable relative to the first carrier (101) and which can be laid on to the folding box (3) and which is also pivotable at the same time with the first carrier (101) about its axis (103).

2. Apparatus according to claim 1 characterised in that the first carrier (101) serves at the same time as a carrier for the second carrier (102).

3. Apparatus according to one or more of the preceding claims characterised in that the first carrier (101) has an arm (105a) and that the second carrier (102) is pivoted to the arm (105a) of the first carrier (101).

4. Apparatus according to one or more of the preceding claims characterised in that the first carrier (101) has an arm (105b) and that pivoted to the arm (105b) is a drive (112) by means of which the second carrier (102) is pivotable relative to the first carrier (101).

5. Apparatus according to one or more of the preceding claims characterised in that the carrier (102) has a projecting support member (113).

6. Apparatus according to one or more of the preceding claims characterised in that the arm or arms (105a, 105b) together with the carrier (101) define an L-shape or a T-shape.

7. Apparatus according to one or more of the preceding claims characterised in that the drive for the second carrier (102) is a piston-cylinder device (112).

8. Apparatus according to one or more of the preceding claims characterised in that the carrier (101) is displaceable about the axis (103) by means of a lever (107) and a piston-cylinder device (108) pivoted thereto.

9. Apparatus according to one or more of the preceding claims characterised in that the carriers (101, 102) are pivotable jointly about the horizontally disposed axis (103) relative to a table plate (8) of the apparatus (1).

10. Apparatus according to one or more of the preceding claims characterised in that the axis (103) is arranged in/under the table plate (8) in such a way that the carrier (101) is pivotable into the plane of the table plate (8).

11. Apparatus according to one or more of the preceding claims characterised in that the carriers (101, 102) are forked.

12. Apparatus according to one or more of the preceding claims characterised in that the two arms (105a and 105b) together form an intermediate portion (105) which is rigidly arranged on the first carrier (101) and that the second carrier (102) is pivoted to its one end and that the drive (112) thereof is pivoted to its other end.

13. Apparatus according to one or more of the preceding claims characterised in that the spacing of the two carriers (101 and 102) from each other is variable.

14. Apparatus according to one or more of the preceding claims characterised in that the intermediate portion (105) is displaceable relative to the carrier (101) for varying the spacing of the two carriers (101 and 102) from each other.

15. Apparatus according to one or more of the preceding claims characterised in that there are provided two intermediate portions (105) which are arranged parallel to each other and which can each be fixed by means of a respective clamping mounting (120) to a shaft (106) mounting the carrier (101) at the bottom end.


**Revendications**

1. Dispositif destiné à retourner des boîtes pliantes (3) ou des boîtes analogues, comportant au moins un premier support (101) entraîné, pivotant autour d'un axe horizontal (103), monté du côté du fond et comportant au moins un second support (102) entraîné séparément et pivotant par rapport au premier support (101) à placer sur la boîte pliante (3), lequel second support (102) peut pivoter en même temps avec le premier support (101) autour de son axe (103).

2. Dispositif selon la revendication 1, caractérisé en ce que le premier support (101) sert en même temps de support au second support (102).

3. Dispositif selon une ou plusieurs des revendications précédentes, caractérisé en ce que le premier support (101) comporte un bras (105a) et en ce que le second support (102) s'articule sur le bras (105a) du premier support (101).

4. Dispositif selon une ou plusieurs des revendications précédentes, caractérisé en ce que le premier support (101) comporte un bras (105b) et en ce que sur le bras (105b) s'articule un mécanisme d'entraînement (112) à l'aide duquel le second support (102) peut pivoter par rapport au premier support (101).

5. Dispositif selon une ou plusieurs des revendications précédentes, caractérisé en ce que le support (102) comporte un élément d'appui (113) saillant.

6. Dispositif selon une ou plusieurs des revendications précédentes, caractérisé en ce que le ou les bras (105a, 105b) présentent avec le support (101) une forme en L ou en T.

7. Dispositif selon une ou plusieurs des revendications précédentes, caractérisé en ce que le mécanisme d'entraînement destine au second support (102) est un vérin (112).

8. Dispositif selon une ou plusieurs des revendications précédentes, caractérisé en ce que le support (101) est réglable autour de l'axe (103), à l'aide d'un levier (107) et d'un vérin (108) s'articulant sur celui-ci.

9. Dispositif selon une ou plusieurs des revendications précédentes, caractérisé en ce que les supports (101, 102) peuvent pivoter ensemble autour de l'axe horizontal (103), par rapport à un plateau de table (8) du dispositif (1).

10. Dispositif selon une ou plusieurs des revendications précédentes, caractérisé en ce que l'axe (103) est place dans/sous le plateau de table (8) de manière que le support (101) puisse pivoter dans le plan du plateau de table (8).

11. Dispositif selon une ou plusieurs des revendications précédentes, caractérisé en ce que les supports (101, 102) sont en forme de fourche.

12. Dispositif selon une ou plusieurs des revendications précédentes, caractérisé en ce que les deux bras (105a, 105b) forment ensemble une pièce intermédiaire (105) qui est placée rigidement sur le premier support (101) et en ce que le second support (102) est articulé à l'une de ses extrémités et en ce qu'à son autre extrémité son mécanisme d'entraînement (112) est articulé.

13. Dispositif selon une ou plusieurs des revendications précédentes, caractérisé en ce que l'écartement des deux supports (101 et 102) est variable.

14. Dispositif selon une ou plusieurs des revendications précédentes, caractérisé en ce que pour faire varier l'écartement des deux supports (101 et 102), la pièce intermédiaire (105) est réglable par rapport au support (101).

15. Dispositif selon une ou plusieurs des revendications précédentes, caractérisé en ce qu'il est prévu deux pièces intermédiaires (105) disposées parallèles entre elles et pouvant être fixées chacune au moyen d'un palier de serrage (120) sur un arbre (106) supportant du côté du fond le support (101).

Fig.1

Fig.2

EP 0 340 502 B1

Fig.3

a)    b)    c)    d)    e)    f)

g)

Fig.4

EP 0 340 502 B1

Fig.5

Fig.6